# EUROPÄISCHE PATENTANMELDUNG

(11) **EP 0 969 576 A1**
(43) Veröffentlichungstag der Anmeldung: **05.01.2000**
(21) Anmeldenummer: 99111223.6
(22) Anmeldetag: 09.06.1999
(51) Int. Cl.: H02B 1/044

(54) **Befehls- oder Meldegerät zum Einbau in eine Schalttafel oder dergleichen**

(30) Priorität: 18.07.1998 DE 19832422; 09.06.1998 DE 19825584
(71) Anmelder: Georg Schlegel GmbH & Co., D-88525 Dürmentingen (DE)
(72) Erfinder: Schlegel, Eberhard, 88525 Dürmentingen (DE)
(74) Vertreter: Eisele, Eberhard, Dipl.-Ing.

(57) **Zusammenfassung**

Es wird ein Befehls- oder Meldegerät zum Einbau in eine Schalttafel oder dergleichen vorgeschlagen, das aus einem ersten Teil mit einem rohrförmigen Gehäuseabschnitt, der in einer senkrechten Einbaurichtung in eine Tragwand einsteckbar ist und mit Befestigungsmitteln, die sich zur Befestigung des Geräts am rohrförmigen Gehäuseabschnitt abstützen, besteht sowie einem zweiten Teil, das ein Gegenstück, insbesondere einen Schaltapparat oder eine Lampenfassung umfaßt, das mit dem rohrförmigen Gehäuseabschnitt mittels einer Rastverbindung zusammensteckbar ist. Erfindungsgemäß sind am rohrförmigen Gehäuseabschnitt (26) des ersten Teils und am Gegenstück (21) Abdrückmittel (33, 34) vorgesehen, die bei einer relativen Drehbewegung der beiden Teile zueinander um eine Drehachse parallel zur Einbaurichtung das Gegenstück (21) zwingend in Einbaurichtung bezüglich des ersten Teils (20) bewegen, bis die Rastverbindung außer Eingriff kommt, so daß die beiden Teile (20, 21) auseinandergezogen werden können.

## Beschreibung

Die Erfindung betrifft ein Befehls- oder Meldegerät zum Einbau in eine Schalttafel oder dergleichen nach dem Oberbegriff des Anspruchs 1.

### Stand der Technik

In der deutschen Patentschrift DE 28 44 578 C2 ist ein Befehletaster zum Einbau in eine Schalttafel beschrieben, der aus 2 Teilen besteht, nämlich einem Betätiger, der dazu bestimmt ist, in Richtung einer zu einer Tragwand senkrechten Einbauachse durch diese Tragwand gesteckt und an dieser befestigt zu werden, und einem Gegenstück. Das Gegenstück kann mit dem Betätiger zusammengesteckt und verrastet werden. Hierzu weist das Gegenstück, z. B. ein Schaltapparat, in radialer Richtung federnd nachgiebige Rastorgane mit sich im Wesentlichen senkrecht zur Einbauachse erstreckenden Hakenflächen auf. Außerdem sind an der Außenseite eines rohrförmigen Gehäuseabschnitts des Betätigers ebenfalls im Wesentlichen senkrecht zur Einbauachse sich erstreckende Stützflächen vorgesehen, hinter welche die Rastorgane beim Zusammenstecken der Teile einfallen. Zusätzlich ist die Verrastung so ausgebildet, daß durch eine Verdrehung des Gegenstücks bezüglich des Betätigers um eine Achse parallel zur Einbauachse die Rastorgane so weit ausgelenkt werden, daß die Teile auseinandergezogen werden können.

Zwar wird hierdurch eine Entriegelung der Verrastung ermöglicht, jedoch ist nach wie vor eine vergleichsweise hohe Kraft erforderlich, um die entriegelten Teile auseinander zu ziehen. Insbesondere bei dichter Anordnung von Befehls- oder Meldegeräten auf einer Schalttafel, kann aufgrund des Platzmangels die Trennung von bereits entriegeltem ersten Teil und Gegenstück dennoch nur mit Hilfe eines Werkzeugs erfolgen, mit dem es möglich ist, das Gegenstück zu greifen.

### Aufgabe und Vorteile der Erfindung

Der Erfindung liegt die Aufgabe zugrunde, ein Befehls- oder Meldegerät der eingangs genannten Art bereitzustellen, bei dem die Entriegelung und das Auseinanderziehen von erstem Teil und Gegenstück vereinfacht ist.

Diese Aufgabe wird durch die Merkmale des Anspruchs 1 gelöst.

In den Unteransprüchen sind vorteilhafte und zweckmäßige Weiterbildungen des erfindungsgemäßen Befehls- oder Meldegerätes angegeben.

Ausgangspunkt der Erfindung ist ein Befehls- oder Meldegerät zum Einbau in eine Schalttafel oder dergleichen, das im Wesentlichen aus 2 Teilen besteht. Einem ersten Teil mit einem rohrförmigen Gehäuseabschnitt, der in einer senkrechten Einbaurichtung in eine Tragwand einsteckbar ist und mit Befestigungsmittel, die sich zur Befestigung des Geräts am rohrförmigen Gehäuseabschnitt abstützen. Sowie einem zweiten Teil, der ein Gegenstück, insbesondere ein Schaltapparat oder eine Lampenfassung umfaßt, das mit dem rohrförmigen Gehäuseabschnitt mittels einer Rastverbindung zusammensteckbar ist. Der Kern der Erfindung liegt nun darin, daß am rohrförmigen Gehäuseabschnitt des ersten Teils und am Gegenstück Abdrückmittel vorgesehen sind, die bei einer relativen Drehbewegung der beiden Teile zueinander um eine Drehachse parallel zur Einbaurichtung das Gegenstück zwingend in Einbaurichtung bzgl. des ersten Teils bewegen bis die Rastverbindung außer Eingriff kommt, so daß die beiden Teile auseinandergezogen werden können. Durch diese Maßnahme läßt sich das Gegenstück völlig werkzeuglos in einfacher Weise abziehen. Denn durch die bereits ausgeführte Bewegung des Gegenstücks in Einbaurichtung ist die Verrastung sicher entriegelt und der Weg verkürzt, der gegebenenfalls mit gespannten Elementen der Rastverbindung auf dem rohrförmigen Gehäuseabschnitt beim Auseinanderziehen überwunden werden muß. Ein zusätzlicher Vorteil ergibt sich, wenn mehrere Befehls- oder Meldegeräte dicht nebeneinander angeordnet sind und durch eine Entriegelung und Verschiebung das Gegenstück über die anderen Gegenstücke der Befehls- oder Meldegeräte übersteht und somit leicht ergriffen werden kann.

Zur Realisierung von besonders zweckmäßigen Abdrückmitteln wird im weiteren vorgeschlagen, daß die Abdrückmittel wenigstens eine Aussparung an einem Teil und eine dazu passende Erhebung am anderen Teil umfassen, wobei die Aussparung und die Erhebung schräge Flächen aufweisen, die derart angeordnet sind, daß sie bei einer Drehung der beiden Teile zueinander aneinander vorbeigleiten und dabei sich das Gegenstück zum ersten Teil in Einbaurichtung bewegt.

In einer besonders bevorzugten Ausführungsform ist als Aussparung wenigstens eine Dreiecksaussparung am unteren Rand des rohrförmigen Gehäuseabschnitts und als Erhebung ein dazu passender Dreieckskeil am Gegenstück vorgesehen. Durch diese Ausgestaltung lassen sich die Abdrückmittel besonders günstig am rohrförmigen Gehäuseabschnitt bzw. am Gegenstück integrieren.

Bei einer weiteren besonders bevorzugten Ausgestaltung der Erfindung ist die Rastverbindung im wesentlichen auf der Innenseite des rohrförmigen Gehäuseabschnitts des ersten Keils ausgebildet. Auf diese Weise wird es möglich, die Rastverbindung bzgl. einer Position entlang der Einbauachse in den Bereich der Befestigungsmittel, z. B. eines Schraubringes bzw. eines Außengewindes für ein Schraubring zu legen, mit welchen das Gerät an einer Tragwand befestigt wird. Dadurch läßt sich das komplette Befehls- und Meldegerät kürzer ausführen, was wertvollen Platz auf der Montageseite einer Schalttafel spart.

In einer außerdem besonders günstigen Ausführungsform umfaßt die Rastverbindung federnd nachgiebige Rastorgane an einem Teil und Stützelemente am anderen Teil, in welche die Rastorgane beim Zusammenstecken der Teile auf der Innenseite des rohrförmigen Gehäuseabschnitts einfallen. In diesem Zusammenhang ist es vorteilhaft, wenn die Stützelemente als ein an der Innenseite des rohrförmigen Gehäuseabschnitts zumindest teilweise in Umfangsrichtung umlaufender Raststeg ausgestaltet sind, welcher im radialen Schnitt eine z. B. Dreiecksform aufweist und wenn die Rastorgane eine dazu passende vorzugsweise dreieckförmige Vertiefung besitzen. Durch diese geometrische Anordnung läßt sich eine vergleichsweise einfache Rastverbindung realisieren, die sich bei entsprechender Kraftanwendung in Einbaurichtung, z. B. durch die Abdrückmittel ohne Deformation der Rastelemente wieder entriegeln läßt.

Zur Bereitstellung einer Rastverbindung, die in Einbaurichtung des Geräts verlgeichsweise große Kräfte aufnehmen kann, ist es vorteilhaft, wenn die Rastorgane eine im wesentlichen senkrecht zur Einbauachse sich erstreckende Hakenfläche besitzen und die Stützelemente Ausnehmungen auf der Innenseite des rohrförmigen Gehäuseabschnitts umfassen, die eine ebenfalls im wesentlichen senkrecht zur Einbauachse sich erstreckende Stützfläche aufweisen, hinter welche die entsprechende Hakenfläche der Rastorgane unter gegenseitiger Überlappung der Haken- und Stützflächen einrastet. Insbesondere bei einer derartigen Ausführungsform ist es im weiteren bevorzugt, wenn an den Rastorganen und/oder den Ausnehmungen wenigstens eine sich im wesentlichen parallel zur Einbauachse erstreckenden Schrägfläche vorgesehen ist, welche bei einer relativen Drehbewegung der beiden Teile um eine Achse parallel zur Einbaurichtung die Rastorgane soweit auslenkt, daß die Teile auseinandergezogen werden können. Dadurch lassen sich beide Teile mittels einer Drehung des Gegenstücks gegenüber dem an der Tragwand befestigten ersten Teil entriegeln, wobei ein kleiner Winkel von z. B. 10-15° schon ausreichend ist. Dieser Vorteil kommt vor allem dann zum Tragen, wenn die Rastverbindung im wesentlichen senkrecht zur Einbauachse sich erstreckende Rastflächen aufweist, die eine Entriegelung in Einbaurichtung nicht gestatten würden. Außerdem läßt sich diese Art der Ausgestaltung der Rastorgane und/oder der Ausnehmungen besonders gut mit den erfindungsgemäßen Abdrückmitteln kombinieren, welche eine Verschiebung in Einbaurichtung ebenfalls durch eine Drehbewegung herbeiführen.

### Zeichnungen

Ein Ausführungsbeispiel der Erfindung ist nachfolgend anhand der Zeichnungen näher erläutert.

Im einzelnen zeigt:
- Fig. 1: eine geschnittene Seitenansicht gemäß der Schnittlinie I-I in Fig. 2 des Gehäuses eines weiteren Betätigers sowie des Gehäuses eines teilweise dargestellten mit dem Betätiger verrasteten weiteren Schaltapparates,
- Fig. 2: das Gehäuse des Schaltapparates gemäß Fig. 1 in einer Ansicht von oben,
- Fig. 3: das Gehäuse des Betätigers gemäß Fig. 1 in einer Ansicht von unten,
- Fig. 4: eine Seitenansicht der Verbindungsstelle von Betätiger und Schaltapparat, aus der in Fig. 5 mit "X" bezeichneten Blickrichtung und
- Fig. 5: eine Seitenansicht gemäß Fig. 4 mit einer alternativen Ausgestaltung von Abdrückmitteln.

### Beschreibung des Ausführungsbeispiels

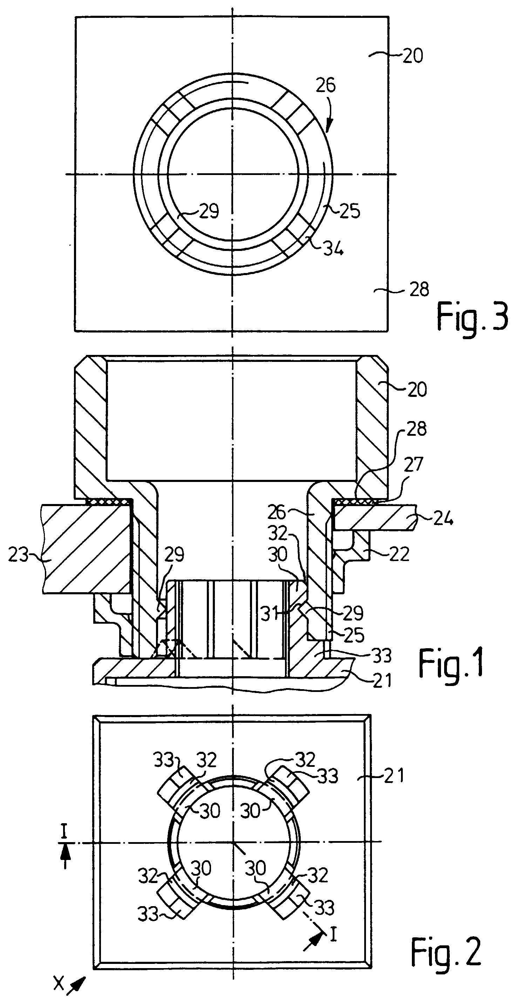

In Fig. 1 ist ein erfindungsgemäßes Ausführungsbeispiel eines Betätigergehäuses 20 mit eingerastetem Schaltapparatgehäuse 21 (teilweise dargestellt) in einer geschnittenen Seitenansicht gemäß der Schnittlinie I-I nach Fig. 2 gezeigt. Die Befestigung des Betätigergehäuses 20 erfolgt über einen Schraubring 22, der entsprechend der Wandstärke einer Tragwand 23, 24 weniger weit oder weiter auf den Gewindebereich 25 eines zylindrischen Gehäuseabschnitts 26 aufgeschraubt ist. Der Schraubring 22 verklemmt die Tragwand 23, 24 mit ggf. einem Dichtmittel 27 bezüglich einem Anschlagkragen 28 des Betätigergehäuses.

Der zylindrische Gehäuseabschnitt 26 gemäß Fig. 1 weist einen im Querschnitt dreieckförmigen vollumfänglichen Raststeg 29 auf. Das Schaltapparatgehäuse 21 besitzt dazu passende um 90° versetzt angeordnete federnd nachgiebige Rastorgane 30. Die Rastorgane 30 sind hierzu mit im Querschnitt ebenfalls dreieckförmigen Keilnuten 31 versehen, die beim Zusammenstecken der Bauelemente in den Raststeg 29 einschnappen. Damit das Einführen der Rastorgane 30 mit Keilnut 31 in einfacher Weise möglich ist, sind die Rastorgane 30 am oberen äußeren Rand jeweils mit einer Schrägfläche 32 versehen (siehe insbesondere Fig. 2).

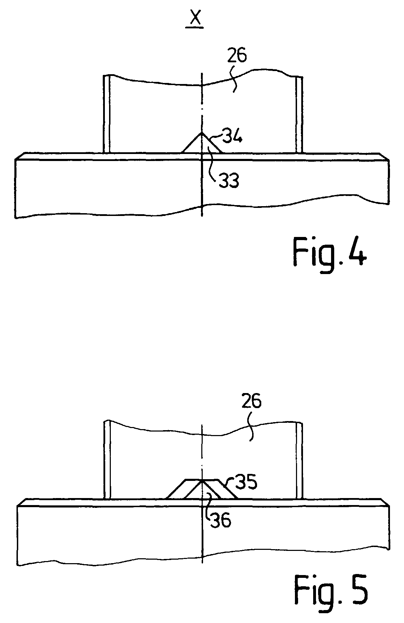

Im unteren Bereich der Rastorgane 30 ist radial nach außen versetzt am Schaltapparatgehäuse jeweils ein Dreieckskeil 33 angeordnet, der sich in eine entsprechende Ausnehmung 34 am unteren Rand des zylindrischen Gehäuseabschnitts 26 im eingerasteten Zustand von Betätiger und Schaltapparat einfügt (vgl. Fig. 3 und 4).

Das Zusammenwirken der Dreieckskeile 33 mit den Ausnehmungen 34, die jeweils 90° versetzt am zylindrischen Gehäuseabschnitt 26 bzw. im Bereich der Rastorgane 30 des Schaltapparatgehäuses 21 angeordnet sind, hat einerseits den Zweck, daß eine eindeutige Positionierung des Schaltapparats zum Betätiger, nämlich in einer 90° Rasterung ermöglicht wird. Andererseits werden erfindungsgemäß durch die Dreieckskeile 33 in den Ausnehmungen 34 Abdrückmittel geschaffen, die bei einer Drehung des Schaltapparats in Bezug auf den Betätiger um eine Achse, die parallel zur Einbaurichtung verläuft, dazu führen, daß der Schaltapparat aufgrund der aneinander vorbeigleitenden Schrägflächen von Ausnehmung und Dreieckskeil eine Bewegung in Einbaurichtung zwingend ausführt, welche die Verrastung von Betätiger und Schaltapparat entriegelt. Durch die Entriegelung mit zusätzlicher Bewegung des Schaltapparats in Einbaurichtung können die Bauteile dann sehr einfach auseinandergezogen werden.

Dies ist insbesondere dann von Vorteil, wenn zum Auseinanderziehen der Bauteile in einer Schalttafelanordnung wenig Platz vorhanden ist. Denn nach dem Entriegelungs- und Verschiebevorgang steht das Gegenstück, z. B. ein Schaltapparat eines Befehlsgerätes über die übrigen Gegenstücke von Befehls- und/oder Meldegeräten in Einbaurichtung nach hinten vor und kann somit in einfacher Weise auch ohne Werkzeug ergriffen und herausgezogen werden.

In Fig. 5 ist eine alternative Ausgestaltung von Abdrückmitteln in einer Ansicht entsprechend Fig. 4 dargestellt. Hierbei sitzen am zylindrischen Gehäuseabschnitt 26 anstatt dreieckförmigen Ausnehmungen trapezförmige Ausnehmungen 35 am unteren Rand. Die darin eingefügten Keile 36 sind nach wie vor dreieckförmig. Diese Ausführungsform ist besonders dann vorteilhaft, wenn die Rastverbindung im Wesentlichen senkrecht zur Einbauachse sich erstreckende Rastflächen aufweist, die durch eine Drehung der Rastverbindung zueinander aufgrund von Schrägflächen entriegelt werden kann, aber eine Entriegelung in Einbaurichtung nicht möglich wäre. Für eine derartige Ausführungsform erlauben die Abdrückmittel zunächst eine Verdrehung der ineinander gerasteten Zeile zueinander, ohne daß die Abdrückmittel eine Bewegung in Einbaurichtung erzwingen würden. Erst wenn durch die Drehung die Rastverbindung außer Eingriff kommt, treffen die Schrägflächen der Ausnehmung 35 bzw. des Keils 36 aufeinander und drücken auch die Teile in Einbaurichtung auseinander. Damit der Entriegelungsvorgang mit anschließender Bewegung bspw. eines Schaltapparates in Einbaurichtung in gewünschterweise von statten geht, ist der Freilauf der Abdrückmittel 35, 36 auf die Drehentriegelung einer Rastverbindung abzustimmen.

### Bezugszeichenliste:

- 20: Betätigergehäuse
- 21: Schalapparatgehäuse
- 22: Schraubring
- 23: Tragwand
- 24: Tragwand
- 25: Gewindebereich
- 26: zylindrischer Gehäuseabschnitt
- 27: Dichtmittel
- 28: Anschlagkragen
- 29: Raststeg
- 30: Rastkragen
- 31: Keilnut
- 32: Schrägfläche
- 33: Dreieckskeil
- 34: Ausnehmung
- 35: Ausnehmung
- 36: Dreieckskeil

## Patentansprüche

1. Befehls- oder Meldegerät zum Einbau in eine Schalttafel oder dergleichen, bestehend aus einem ersten Teil mit einem rohrförmigen Gehäuseabschnitt, der in einer senkrechten Einbaurichtung in eine Tragwand einsteckbar ist und mit Befestigungsmittel, die sich zur Befestigung des Geräts an rohrförmigen Gehäuseabschnitt abstützen sowie einem zweiten Teil, das ein Gegenstück, insbesondere einen Schaltapparat oder eine Lampenfassung umfaßt, das mit dem rohrförmigen Gehäuseabschnitt mittels einer Rastverbindung zusammensteckbar ist, dadurch gekennzeichnet, daß am rohrförmigen Gehäuseabschnitt (26) des ersten Teils und am Gegenstück (21) Abdrückmittel (33, 34) vorgesehen sind, die bei einer relativen Drehbewegung der beiden Teile zueinander um eine Drehachse parallel zur Einbaurichtung das Gegenstück (21) zwingend in Einbaurichtung bezüglich des ersten Teils (20) bewegen, bis die Rastverbindung außer Eingriff kommt, so daß die beiden Teile (20, 21) auseinandergezogen werden können.

2. Befehls- oder Meldegerät nach Anspruch 1, dadurch gekennzeichnet, daß die Abdrückmittel wenigstens eine Aussparung (34) an einem Teil und eine dazu passende Erhebung (33) am anderen Teil umfassen, wobei die Aussparung (34) und die Erhebung (33) schräge Flächen aufweisen, die derart angeordnet sind, daß sie bei einer Drehung der beiden Teile zueinander aneinander vorbeigleiten und dabei sich das Gegenstück (21) zum ersten Teil (20) in Einbaurichtung bewegt.

3. Befehls- oder Meldegerät nach Anspruch 2, dadurch gekennzeichnet, daß als Aussparung wenigstens eine Dreiecksaussparung (34) am unteren Rand des rohrförmigen Gehäuseabschnitts (26) und als Erhebung ein dazu passender Dreieckskeil (33) am Gegenstück (21) vorgesehen ist.

4. Befehls- oder Meldegerät nach einem der vorhergehenden Ansprüche, dadurch gekennzeichnet, daß die Rastverbindung im Wesentlichen auf der Innenseite des rohrförmigen Gehäuseabschnitts (3, 26) des ersten Teils ausgebildet ist.

5. Befehls- oder Meldegerät nach einem der vorhergehenden Ansprüche, dadurch gekennzeichnet, daß die Rastverbindung federnd nachgiebige Rastorgane (12, 30) an einem Teil und Stützelemente (13) am anderen Teil umfaßt, in welche die Rastorgane (12, 30) beim Zusammenstecken der Teile auf der Innenseite des rohrförmigen Gehäuseabschnitts (3, 26) einfallen.

6. Befehls- oder Meldegerät nach Anspruch 5, dadurch gekennzeichnet, daß die Stützelemente als ein auf der Innenseite des rohrförmigen Gehäuseabschnitts (26) zumindest teilweise in Umfangsrichtung umlaufender Raststeg (29) ausgestaltet sind, welcher im Querschnitt eine vorzugsweise Dreiecksform aufweist und daß die Rastorgane eine dazu passende, vorzugsweise dreieckförmige Vertiefung (31) besitzen.

7. Befehls- oder Meldegerät nach Anspruch 5, dadurch gekennzeichnet, daß die Rastorgane (3) eine im Wesentlichen senkrecht zur Einbauachse sich erstreckende Hakenfläche (14) besitzen und die Stützelemente Ausnehmungen (10) auf der Innenseite des rohrförmigen Gehäuseabschnitts (3) umfassen, die eine ebenfalls im Wesentlichen senkrecht zur Einbauachse sich erstreckende Stützfläche (13) aufweisen, hinter welche die entsprechende Hakenfläche (14) der Rastorgane (12) unter gegenseitiger Überlappung der Haken- und Stützfläche (13, 14) einrastet.

8. Befehls- oder Meldegerät nach Anspruch 7 oder 8, dadurch gekennzeichnet, daß an den Rastorganen (12, 30) und/oder den Ausnehmungen (10) wenigstens eine sich im Wesentlichen parallel zur Einbauachse erstreckende Schrägfläche (15) vorgesehen ist, welche bei einer relativen Drehung der beiden Teile um eine Achse parallel zur Einbaurichtung die Rastorgane (12, 30) soweit auslenkt, daß die Teile auseinandergezogen werden können.
